# EUROPEAN PATENT SPECIFICATION

(11) **EP 2 129 521 B1**
(45) Date of publication and mention of the grant of the patent: **02.01.2019**
(21) Application number: 07705689.3
(22) Date of filing: 26.02.2007
(51) Int. Cl.: B32B 27/04, C08L 63/00

(54) **IMPROVED SURFACE FINISH FOR COMPOSITE MATERIALS**
VERBESSERTE OBERFLÄCHENBESCHAFFENHEIT FÜR VERBUNDWERKSTOFFE
FINI DE SURFACE AMÉLIORÉ POUR MATÉRIAUX COMPOSITES

(43) Date of publication of application: 09.12.2009
(73) Proprietor: Hexcel Composites, Ltd., Duxford Cambridge CB2 4QB (GB)
(72) Inventor: HEIDRICH, Armin, Cambridge CB1 3HJ (GB)
(74) Representative: Sarlin, Laure V.
(86) International application number: PCT/IB2007/000594
(87) International publication number: WO 2008/104822

(56) References cited:
- EP-A2- 1 504 890
- WO-A-2006/043019
- DE-A1- 10 010 466
- US-A1- 2002 136 853

## Description

### BACKGROUND OF THE INVENTION

### 1. Field of the Invention

The present invention relates generally to composite materials that are used to make products, such as automobile body panels, that require an extremely flat surface finish. More particularly, the present invention is directed to methods and compositions that maintain the aesthetic appearance of such extremely flat surfaces even after the composite material has undergone hygroscopic and/or thermal aging.

### 2. Description of Related Art

Thermosetting resins are popular materials that are used in the fabrication of a wide variety of composite materials. Epoxy resins, bismaleimide resins and cyanate ester resins are examples of popular thermosetting resins. Composite materials typically include one or more resins that are combined with fibers or other support materials to form lightweight structures that are relatively strong. In addition to their wide spread use as a matrix material in composites, thermosetting resins have also been used to provide a surface finish film (SFF) or finish coating on the exterior surface of composite materials. Composite materials and surface finish films or layers that utilize thermosetting resins have been widely been used in the aerospace and automotive industry where their combination of lightweight and structural strength is particularly desirable.

When producing laminates from thermosetting composite materials, such as epoxy - carbon prepreg, the profile of the fiber pattern (typically a woven fiber fabric) is visible on the surface of the laminate after it is cured. This phenomenon is commonly referred to as fiber "print-through". Print-through is caused by thermal and chemical shrinkage of the resin matrix. The thermal shrinkage is due to the coefficient of thermal expansion (CTE) of the resin matrix being much higher than the CTE of the carbon fibers. The chemical shrinkage is a result of the volume loss which occurs when the monomers in the resin react during curing to form the crosslinked polymer matrix.

The initial fiber print-through can generally be overcome easily by using a surface finish film, which in its basic form is a layer of resin. Any print-through that remains after application of the surface finish film is typically removed by sanding or other post-cure operations that are used to prepare the surface for painting. The use of a surface finish film is effective for initially eliminating print-through. However, the print-through typically re-appears fairly soon upon hygroscopic and/or thermal aging. In general, it takes less than 5 days for the print-through to re-appear when the painted laminate is subjected to a hydro-thermal aging cycle that is commonly used in the automotive industry.

One approach to reducing eventual fiber print-through is to use unidirectional fibers or thin and flat fabrics that have a relatively flat fiber pattern. However, even when the flattest fabrics are used, there still is a certain degree of print through that eventually occurs. Another approach is to increase the thickness of the surface finish film. However, this results in an increase in the overall weight of the structure and may not provide long-term elimination of print-through. Neither of these approaches has been completely satisfactory when used alone or in combination. Especially when a highly aesthetic part, like an automotive body panel, is being made.

In view of the above, there is a continuing need to provide materials and methods for making highly aesthetic composite parts, like automotive body panels, where print-through is substantially eliminated, even after the part has been subjected to long-term exposure to a broad range of environmental conditions.

### SUMMARY OF THE INVENTION

In accordance with the present invention, it was discovered that composite materials can be made that have surfaces which are extremely flat and which remain extremely flat, even after an extended period of environmental aging. The present invention provides for such extremely flat and durable surface finishes without utilizing overly thick surface finishing films or overly flat fabric patterns.

The present invention is based on the discovery that the addition of rubber particles to the matrix resin, in combination with a relatively flat fabric pattern and the use of a surface finish film, provides composite materials with surface finishes that are extremely flat after initial curing. It was further discovered that the surfaces of the composite materials in accordance with the present invention, even after extended periods of aging, did not exhibit print-through and remained extremely flat.

The present invention is directed to composite materials that have a durable surface finish that is extremely flat. The composite material includes a fiber layer that includes fibers, which form a surface having a fiber pattern thereon. The matrix resin for the composite material includes a thermosetting resin that has rubber particles dispersed therein. The matrix resin forms a resin surface on the fiber pattern. The composite material also includes a surface finish film that is located on the resin surface. The surface finish film is present in an amount that is between 100 and 800 grams per square meter (gsm) The combination of fiber layer, matrix resin and surface finish film provides the composite material with an extremely flat surface that retains its flatness, even when the composite material is subjected to extended periods of aging.

The present invention also covers methods for making the composite materials that have durable surface finishes that are extremely flat. The method involves providing a laminate that is composed of a fiber layer and a matrix resin. As a feature of the present invention, the matrix resin includes a thermosetting resin that has rubber particles dispersed therein. As a further feature of the invention, a surface finish film, which is applied to the laminate in an amount equal to between 100 and 800 gsm. The combination of laminate and surface finish film is cured using an appropriate mold and sanded or otherwise treated, if necessary, to provide composite materials that have durable surfaces which are extremely flat.

The above described and many other features and attendant advantages of the present invention will become better understood by reference to the following detailed description.

### DETAILED DESCRIPTION OF THE INVENTION

The present invention may be used to provide long-lasting extremely flat surface finishes for a wide variety of composite products. The invention is especially well suited for use in the automotive industry for providing exterior composite parts, such as body panels, that must have surface finishes which are highly aesthetic and which must be able to maintain their high degree of surface finish over long periods of time in a multitude of environmental conditions. The invention is also applicable to aerospace, marine, energy and sports industries and in any situations where extremely flat and long-lasting exterior composite part surfaces may be desired.

The composite materials of the present invention must have a surface finish that is "extremely flat". The term "extremely flat", as used herein means that the surface has an average waviness (Wave) of less than 40 BYK Gardner wavescan units and preferably less than 35 BYK Gardner wavescan units. Waviness is a property of surfaces that is commonly measured and widely known in the automotive industry. One of the most common ways of measuring waviness is to use the automotive wavescan device that is available from BYK Gardner (Columbia, Maryland). The BYK Gardner automotive wavescan device is used widely in the automotive industry to measure the waviness of surface finishes and has become widely recognized as a standard instrument for measuring the flatness of a surface.

The waviness of a given composite surface, as measured by the BYK Gardner wavescan device, is expressed as "wavescan units". The waviness of a given surface is typically measured over different wavelength regions that are expressed as Wₐ, W_{b}, W_{c} and W_{d}. In accordance with the present invention, the flatness of a given surface is expressed as the average waviness (Wave), which is the average of Wₐ, W_{b}, W_{c} and W_{d}, as measured using the BYK Gardner wavescan device. Other devices may be used to measure the waviness (Wₐ, W_{b}, W_{c} and W_{d}) of a surface to determine if it is "extremely flat" in accordance with the present invention provided that the results are converted to BYK Gardner wavescan units using known industry conversion factors. Average waviness (Wave) is then determined by averaging the four BYK Gardner waviness values.

The average surface waviness of less than 40 BYK Gardner wavescan units that is required for a composite material surface to be considered extremely flat in accordance with the present invention must be present not only after initial curing of the composite material, but must also be present after extended periods of exposure to the elements. In other words, the extreme flatness of the surface must be "durable". When used herein, the term "durable" means that the average waviness of the surface of the composite material is initially less than 25 wavescan units and that the average waviness of the surface remains below 25 when the composite material has been subjected to 30 days of a hydro-thermal aging process commonly used in the automotive industry. In addition, "durable" further means that the average waviness of the surface of the composite material remains below 40 BYK Gardner wavescan units (preferably 35 wavescan units) after the composite material has been subjected to 90 days of the hydro-thermal aging process.

The hydro-thermal aging process that is used to determine if a surface is "durable" in accordance with the present invention involves subjecting the composite material to a continuous series of 12-hour hydro-thermal aging cycles over a 90 day period. This results in the composite material being subjected to a total of 180 12-hour cycles. During each 12-hour aging cycle, the composite material is exposed to varying degrees of heat and moisture. The temperature starts out at 20°C and is raised to 80°C during the first hour of the cycle. The temperature is kept at 80°C for four hours and then reduced to -40°C over a period of two hours. The temperature is kept at -40°C for four hours and then increased back to 20°C during the final hour of the cycle. The humidity to which the composite material is exposed during the 12-hour aging cycle starts out at 50% relative humidity (RH). During the first hour of the cycle, the RH is gradually increased to 80% RH and kept there for four hours. The RH is then reduced to approximately 20% RH over the next two hours and kept there for four hours. During the final hour of the cycle, the RH is increased back to 50%.

The fibers that are used to make the fiber layer can be any of the fiber materials that are used to form composite laminates and which are composed of appropriately sized fibers and fiber tows that are woven in a pattern that is sufficiently tight to provide an average surface waviness of less than 25 wavescan units when combined with the matrix resin and surface finish film as described below. Exemplary fiber materials include glass, aramid, carbon, ceramic and hybrids thereof. The fibers may be woven, unidirectional or in the form of random fiber mat. Woven carbon fibers are preferred, such as plain, harness satin, twill and basket weave styles that have areal weights from 80 - 600 grams per square meter (gsm), but more preferably from 190 - 300 gsm. The carbon fibers can have from 1,000 - 40,000 filaments per tow, but more preferably 3,000 - 12,000 filaments per tow. All of which are commercially available. Similar styles of glass fabric may also be used with common types being 6080 and 7781 glass fabric. When unidirectional constructions are used, typical ply-weights are 150 gsm for carbon and 250 gsm for glass.

Woven carbon fiber fabrics that are suitable may be obtained commercially from a number of sources. Exemplary carbon fabric includes G803 carbon fabric, 48192C carbon, which are available from Hexcel Corporation (Dublin, California).

If desired for structural support or other design considerations, the composite material may include fabric layers that are much coarser than the above fabrics. However, the coarser fabric layers must be located in the interior of the laminate or part such that they do not affect the exposed surface of the composite material. It is preferred that at least two layers of the flatter fabrics, as described above, be located between the exposed surface of the composite material and the underlying coarser fabric layers.

In accordance with the present invention, the fiber layer is impregnated with a matrix resin that is composed of a thermosetting resin in which core/shell particles are dispersed. The thermosetting resin includes a curative agent and may include other additives that are conventionally used in matrix resins in the automotive industry. The amount of matrix resin that is used to impregnate the fiber layer will range from 30 to 55% of the total weight of the combined fiber layer and resin matrix. Resin levels of between 40 to 45% by weight are preferred. The matrix resin is applied such that during molding of the laminate, the surface of the fiber layer is covered with a thin layer of resin that forms a resin surface against the mold. This thin layer of resin is commonly referred to as a "surface finish film". The thickness of the surface finish film is determined by the areal weight of the film, which is between 100 and 800 grams per square meter.

The preferred thermosetting resin is an epoxy. However, if desired, other thermosetting resins, such as cyanate ester resins or bismaleimide resin, may be used. The epoxy resin may include one or more types of difunctional or multifunctional epoxy resins that are conventionally used to make epoxy composite laminates. Exemplary difunctional epoxies include liquid or solid bisphenol A diglycidyl ether (DGEBA) epoxy resins, bisphenol-F epoxy resins (DGEBF), bisphenol-S epoxy resins as well as phenol novolak type epoxies, cresol novolak type epoxies and resorcinol type epoxies. Exemplary multifunctional epoxies include triglycidyl p-aminophenol epoxy resin and tetraglycidyl diaminodiphenyl methane.

Epoxy resins are available from a wide variety of commercial sources. Exemplary liquid DGEBA epoxy resins are available from Dow Chemical Company (Midland, Michigan) under the tradename DER. Other exemplary liquid DGEBA epoxy resins are available from Huntsman Advanced Materials (Basel, Switzerland) under the tradename Araldite. Exemplary liquid DGEBF epoxy resins are available from Hexion Specialty Chemicals (Clayton, England) under the tradename Epikote, from Huntsman Advanced Materials (Basel, Switzerland) under the tradename Araldite and from Dow Chemical Company (Midland, Michigan) as DEN. Exemplary solid DGEBA epoxy resins are also available from Dow Chemical Company (Midland, Michigan) under the tradename DER and Huntsman Advanced Materials (Basel, Switzerland) under the tradename Araldite. Multifunctional epoxy resins are available from Huntsman Advanced Materials (Basel, Switzerland) under the tradenames Araldite MY-721, MY-720 and MY-9512, MY0510 and MY0500, which are all tetraglycidyl diaminophenyl methane epoxy resins.

The curing agent that is included in the thermosetting resin can be any suitable agent for curing epoxy resin systems. It is preferred that the curing agent be an amine curative agent. Dicyandiamide is the preferred curing agent. Other exemplary amine curing agents include dicianimide, 3,3-diaminodiphenylsulfone (3,3-DDS), 4,4'-diaminodiphenylsufone (4.4'-DDS), Bisphenol S and the range of aromatic curatives, such as 4,4'-methylenebis(2-isopropyl-6-methylaniline) (MMIPA), 4,4'-methylenebis(2,6-diethylaniline) (MDEA), 4,4'-methylenebis(2,6-diethyl-3-chloroaniline (MCDEA) which are available from Lonza (Basel, Switzerland) under the trandename Lonzacure. The amount of curing agent(s) used in a particular epoxy system will vary widely depending upon the particular curing agent and the particular epoxy resin or blend of epoxy resins. For dicyandiamide and related curing agents that are used in epoxy resin systems, the amount of curing agent may vary from 1 to 20 weight percent or more of the total thermosetting resin composition.

The rubber particles that are dispersed in the thermosetting resin in accordance with the present invention are present in amounts ranging from 1 to 20 weight percent. The rubber particles may be any of the core/shell particles where a soft core is surrounded by a hard shell. Preferred core/shell particles are those having an acrylic rubber core or butadiene-acrylonitrile rubber core and a polyacrylate shell. Core/shell particles having a hard core surrounded by a soft shell may also be used, if desired. Core/shell particles are described in U.S. Pat. Nos. 5,804,655; 5,266,610; and 6,063,839.

Core/shell particles having rubber cores and polyacrylate shells are available commercially from Kaneka Texas Corporation (Houston, Texas) under the tradenames Kane Ace MX. The core/shell particles range in size from 80 to 100 nm and are supplied as a 25 weight percent suspension of particles in an epoxy resin. It is preferred, but not required, that the core/shell particles be added to the resin mixture as a suspension of particles in a suitable epoxy resin. Kane Ace MX411 is a 25 weight percent suspension of core/shell particles in MY721 epoxy resin and is a suitable source of core/shell particles. Kane Ace MX120 is a 25 weight percent suspension of the same core/shell particles in DER 331 resin and is a preferred source of core/shell particles. Other suitable core/shell suspensions include Kane Ace MX130 (bis F resin), MX136 (bis F resin), MX210 (novolac resin), MX451 (TGAP -MY0510 resin). Core/shell particles are also available from a number of other commercial sources including Nanoresin AG (Geesthacht, Germany), which supplies silicone rubber core / oraganic shell particles under the tradename ALBIDUR, and Rohm and Haas (Paris, France), which supplies core/shell particles under the tradename EXL. The average size of the EXL core/shell particles range from 100 to 600 nm.

It is preferred that the thermosetting resin contains from 20 to 70 weight percent of MX120 (or a similar suspension containing 25 weight percent of core/shell particles suspended in epoxy resin). More preferred is from 30 to 50 weight percent of the core/shell suspension with about 40 weight percent being particularly preferred. The use of the preceding amounts of particle suspensions produce thermosetting resins having from 4.0 weight percent to 17.5 weight percent core/shell particles or more preferably from 7.5 to 12.5 weight percent core/shell particles and most preferably about 10 weight percent of core/shell particles. Suspensions that contain 25 weight percent core/shell particles in epoxy resin are preferred because they provide a convenient way to add the needed amounts of core/shell particles to the epoxy resin to form the final thermosetting resin in which the particles are suspended. However, suspensions of differing amounts of core/shell particles in suitable epoxy resins may be used provided that the amount of core/shell particles added produces a thermosetting resin with an amount of dispersed particles that falls within the ranges set forth above. Although it is not preferred, the core/shell particles may be added directly to an epoxy resin to form the final thermosetting resin provided that suitable equipment is used to obtain a satisfactory dispersion with no large agglomerates.

Other rubber particles that may be used in place of core shell particles include particles made from styrene-b-butadiene-b-methyl-methacrylate (SBM) block co-polymer, poly(methylmethacrylate-b-butylacrylate-b-methylmethacrylate) (MAM) block co-polymer. SBM block co-polymer particles are preferred in amounts ranging from 1 to 5 weight percent with about 3 weight percent being particularly preferred. SBM block co-polymer that may be used to form rubber particles are available commercially from Arkema Inc. (Houston, Texas). The rubber particles that are dispersed in the final resin matrix should have sizes ranging from 20 nanometers to 2 micrometers.

It is preferred that one or more fiber layers be impregnated with the thermosetting resin to form a laminate on which the surface finish film is applied. Alternatively, the surface finish film may be applied to the surface of the mold. In this case, the fiber layers and resin matrix are applied separately to the mold or they may be applied to the mold as a laminate.

The surface finish film is an epoxy resin. The same epoxy resins described in connection with the resin matrix may be used to form the surface finish film. The surface finish film may be applied by spraying or by application of a film layer or by any of the known methods for applying surface finish films to the laminate or mold surface. The surface film is applied so that it covers the underlying laminate with between 100 to 800 gsm of film. It is preferred that the amount of surface film is from 200 to 600 gsm with about 360 gsm being particularly preferred. These areal weights of surface finish films, when used in combination with the other features of the invention, provide durable surface finishes that are extremely flat.

Composite materials are made in accordance with the present invention using conventional procedures for molding automotive parts. The fiber layers and resin matrix are preferably formed into a laminate that is coated with the surface finish film and placed in an appropriate mold which is capable of forming a surface on the resulting composite part that has an average waviness of less than 25 BYK Gardner wavescan units. Typically, the surface of the mold will have an average waviness that is significantly less than 25 wavescan units, so that any initial waviness in the surface will be due to print-through from the underlying fabric. In those situations where the initial waviness of the molded composite surface, due to the mold or otherwise, is greater than 25 BYK Gardner average wavescan units, the surface may be sanded or otherwise treated to flatten the surface so that it meets the initial requirement of being extremely flat.

The molding procedures and molding conditions that are used to form the composite part can be any of those well known in the art for making composite parts that have extremely flat surfaces. Typical molding temperatures are on the order of 100°C to 150°C and higher depending upon the particular resin system. Molding/cure times on the order of 45 minutes to 2 hours or more are typical.

### COMPARATIVE EXAMPLE 1

A laminate was made using 4 plies of 48192C carbon fabric that was impregnated with a standard automotive epoxy resin system (30-60 weight percent bis-phenol A; 10-30 weight percent epoxy phenol novolak; 1-5 weight percent dicyandiamide; and 1-5 weight percent fenuron) that did not contain any core/shell particles. The laminate contained 42% by weight of the epoxy resin. No surface finish film was applied to the laminate. The laminate was molded under standard conditions (140°C for 90 minutes) in a mold that had a mold surface with an average waviness that was less than 1 BYK Gardner wavescan units. The surface of the resulting molded composite material had an average waviness of 24.2 wavescan units immediately after molding. After hydro-thermal aging for 30 days using the previously described 12-hour automotive aging cycle, the average waviness of the surface increased to 46.8 BYK Gardner wavescan units. After hydro-thermal aging for 90 days using the previously described 12-hour automotive aging cycle, the average waviness of the surface decreased to 42.6 wavescan units. Accordingly, the surface of the molded composite material was initially extremely flat, but it was not durable in accordance with the present invention because the average waviness of the surface after 30 days of aging was above 25 BYK Gardner wavescan units and after 90 days of aging was above 40 BYK Gardner wavescan units.

### COMPARATIVE EXAMPLE 2

A laminate was made and cured in the same manner as COMPARATIVE EXAMPLE 1 except that a standard bis-phenol A epoxy surface finish film was applied to the laminate prior to molding. The surface finish film was applied at a rate of 360 grams per square meter. The surface of the resulting molded composite material had an average waviness of 23.4 BYK Gardner wavescan units immediately after molding. After hydro-thermal aging for 30 days using the 12-hour automotive aging cycle, the average waviness of the surface increased to 30.7 BYK Gardner wavescan units. After hydro-thermal aging for 90 days using the previously described 12-hour automotive aging cycle, the average waviness of the surface increased to 43.5 BYK Gardner wavescan units. Accordingly, the surface of the molded composite material was initially extremely flat, but it was not durable in accordance with the present invention.

### EXAMPLE 1

A composite material was prepared and molded in the same manner as COMPARATIVE EXAMPLE 2, except that a standard bis-phenol A epoxy resin was used in place of the novolak resin blend and KANE ACE MX-120 (25% by weight core/shell particles dispersed in DGEBA) was added to the resin to provide a mixture containing 60 weight percent epoxy and 40 weight percent MX-120 (10 weight percent core/shell particles). The laminate was molded at 120°C for 90 minutes. The surface of the resulting molded composite material had an average waviness of 20.0 BYK Gardner wavescan units immediately after molding. After hydro-thermal aging for 30 days using the 12-hour automotive aging cycle, the average waviness of the surface increased to 23.4 BYK Gardner wavescan units. After hydro-thermal aging for 90 days using the 12-hour automotive aging cycle, the average waviness of the surface increased to 34.0 wavescan units. Accordingly, the surface of the molded composite material was initially extremely flat and it was also "durable" in accordance with the present invention.

Additional exemplary laminates may be made that are the same as the preceding comparative laminates, except that 4 plies of G803 carbon fabric are used in place of the 4 plies of 48192C fabric. These cured laminates will initially be extremely flat (average waviness of less than 25 BYK Gardner wavescan units) and will be durable in accordance with the present invention. However, it is expected that the average waviness after hydro-thermal aging for 90 days using the 12-hour automotive aging cycle will be less than 40 wavescan units, but greater than the preferred level of 35 wavescan units.

### EXAMPLE 2

A composite material is prepared in the same manner as EXAMPLE 1, except that the same standard novolak epoxy blend used in Comparative Example 1 is used in place of the standard bis-phenol A epoxy resin and the cure temperature is adjusted upward accordingly. The surface of the resulting molded composite material will have an average waviness of below 25 BYK Gardner wavescan units immediately after molding. After hydro-thermal aging for 30 days using the 12-hour automotive aging cycle, the average waviness of the surface will not increase to above 25 BYK Gardner wavescan units. After hydro-thermal aging for 90 days using the 12-hour automotive aging cycle, the average waviness of the surface will not increase to above 35.0 wavescan units. Accordingly, the surface of the molded composite material will be initially extremely flat and it will also be "durable" in accordance with the present invention.

### COMPARATIVE EXAMPLE 3

A laminate was made using 4 plies of G803 carbon fabric that was impregnated with the same resin matrix as Example 1, which did not contain any core/shell particles. The laminate contained 42% by weight matrix resin. No surface finish film was applied to the laminate. The laminate was molded under standard conditions (120 °C for 90 minutes) in a mold that had a mold surface with an average waviness that was less than 1 BYK Gardner wavescan unit. The surface of the resulting laminate had an average waviness of 30.6 BYK Gardner wavescan units immediately after molding. After hydro-thermal aging for 30 days using the 12-hour automotive aging cycle, the average waviness of the surface increased to 41.2 BYK Gardner wavescan units. After hydro-thermal aging for 90 days using the 12-hour automotive aging cycle, the average waviness of the surface increased to 45.3 BYK Gardner wavescan units. Accordingly, the surface of the laminate was neither extremely flat nor durable in accordance with the present invention.

Additional comparative laminates may be made that are the same as the preceding comparative laminates, except that 4 plies of 48192C carbon fabric are used in place of the 4 plies of G803 fabric. These cured laminates will initially be extremely flat (average waviness of less than 25 BYK Gardner wavescan units). However, they will not be durable in accordance with the present invention.

### COMPARATIVE EXAMPLE 4

A composite material was prepared and molded in the same manner as COMPARATIVE EXAMPLE 3, except that KANE ACE MX-120 (25% by weight core/shell particles dispersed in DGEBA) was added to the resin to provide a blend that included 60 weight percent of the standard bis-phenol A resin and 40 weight percent MX-120. The surface of the resulting molded composite material had an average waviness of 38.0 wavescan units immediately after molding. After hydro-thermal aging for 30 days using the 12-hour automotive aging cycle, the average waviness of the surface increased to 39.1 BYK Gardner wavescan units. After hydro-thermal aging for 90 days using the 12-hour automotive aging cycle, the average waviness of the surface increased to 41.9 BYK Gardner wavescan units. Accordingly, the surface of the molded composite material was neither extremely flat nor durable in accordance with the present invention.

Additional comparative laminates may be made that are the same as the preceding comparative laminates, except that 4 plies of 48192C carbon fabric are used in place of the 4 plies of G803 fabric. These cured laminates will initially be extremely flat (average waviness that is less than 25 BYK Gardner wavescan units). However, they will not be durable in accordance with the present invention.

### COMPARATIVE EXAMPLE 5

A laminate was made and cured in the same manner as COMPARATIVE EXAMPLE 3 except that a standard epoxy surface finish film was applied to the laminate prior to molding. The surface finish film was applied at a rate of 620 grams per square meter. The surface of the resulting molded composite material had an average waviness of 24.8 wavescan units immediately after molding. After hydro-thermal aging for 30 days using the 12-hour automotive aging cycle, the average waviness of the surface increased to 26.7 BYK Gardner wavescan units. After hydro-thermal aging for 90 days using the 12-hour automotive aging cycle, the average waviness of the surface increased to 45.0 BYK Gardner wavescan units. Accordingly, the surface of the molded composite material was initially extremely flat, but it was not durable in accordance with the present invention.

### EXAMPLE 3

A laminate is made and cured in the same manner as COMPARATIVE EXAMPLE 4 except that a standard epoxy surface finish film is applied to the laminate prior to molding. The surface finish film is applied at a rate of 360 grams per square meter. The surface of the resulting molded composite material will have an average waviness of less than 25 BYK Gardner wavescan units immediately after molding. After hydro-thermal aging for 30 days using the 12-hour automotive aging cycle, the average waviness of the surface will not increase above 25 BYK Gardner wavescan units. After hydro-thermal aging for 90 days using the 12-hour automotive aging cycle, the average waviness of the surface will not increase above 40 BYK Gardner wavescan units. Accordingly, the surface of the molded composite material is initially extremely flat and is also durable in accordance with the present invention.

Additional exemplary laminates may be made that are the same as the preceding exemplary laminates, except that 4 plies of 48192C carbon fabric are used in place of the 4 plies of G803 fabric. These cured laminates will initially be extremely flat and they will also be durable in accordance with the present invention.

### COMPARATIVE EXAMPLE 6

A laminate is made in the same manner as Comparative Example 3, except that 3% by weight Arkema SBM block co-polymer is included in the matrix resin. The surface of the resulting laminate had an average waviness of 40.3 BYK Gardner wavescan units immediately after molding. After hydro-thermal aging for 30 days using the 12-hour automotive aging cycle, the average waviness of the surface increased to 43.0 BYK Gardner wavescan units. After hydro-thermal aging for 90 days using the 12-hour automotive aging cycle, the average waviness of the surface increased to 46.4 BYK Gardner wavescan units. Accordingly, the surface of the laminate was neither extremely flat nor durable in accordance with the present invention.

### EXAMPLE 4

A laminate is made in the same manner as Comparative Example 6, except that a standard epoxy surface finish film is applied to the laminate prior to molding. The surface finish film is applied at a rate of 360 grams per square meter. The surface of the resulting molded composite material will have an average waviness of less than 25 BYK Gardner wavescan units immediately after molding. After hydro-thermal aging for 30 days using the 12-hour automotive aging cycle, the average waviness of the surface will not increase above 25 BYK Gardner wavescan units. After hydro-thermal aging for 90 days using the 12-hour automotive aging cycle, the average waviness of the surface will not increase above 40 BYK Gardner wavescan units. Accordingly, the surface of the molded composite material is initially extremely flat and is also durable in accordance with the present invention.

### COMPARATIVE EXAMPLE 7

A composite material was prepared and molded in the same manner as COMPARATIVE EXAMPLE 3, except that ALBIDUR (40% by weight silicone rubber core / oragnicshell particles dispersed in DGEBA) was added to the resin to provide a blend that included 60 weight percent of the standard bis-phenol A resin and 40 weight percent ALBIDUR. The surface of the resulting molded composite material had an average waviness of 24.6 wavescan units immediately after molding. After hydro-thermal aging for 30 days using the 12-hour automotive aging cycle, the average waviness of the surface increased to 35.8 BYK Gardner wavescan units. After hydro-thermal aging for 90 days using the 12-hour automotive aging cycle, the average waviness of the surface increased to 36.5 BYK Gardner wavescan units. Accordingly, the surface of the molded composite material was extremely flat but not durable in accordance with the present invention.

### EXAMPLE 5

A laminate is made in the same manner as Comparative Example 7, except that a standard epoxy surface finish film is applied to the laminate prior to molding. The surface finish film is applied at a rate of 360 grams per square meter. The surface of the resulting molded composite material will have an average waviness of less than 25 BYK Gardner wavescan units immediately after molding. After hydro-thermal aging for 30 days using the 12-hour automotive aging cycle, the average waviness of the surface will not increase above 25 BYK Gardner wavescan units. After hydro-thermal aging for 90 days using the 12-hour automotive aging cycle, the average waviness of the surface will not increase above 40 BYK Gardner wavescan units. Accordingly, the surface of the molded composite material is initially extremely flat and is also durable in accordance with the present invention.

Additional exemplary laminates may be made that are the same as the preceding exemplary laminates, except that 4 plies of 48192C carbon fabric are used in place of the 4 plies of G803 fabric. These cured laminates will initially be extremely flat and they will also be durable in accordance with the present invention.

### COMPARATIVE EXAMPLE 8

A composite material was prepared and molded in the same manner as COMPARATIVE EXAMPLE 3, except that NANOPOX F400, available from Nanoresin AG (Geesthacht, Germany) were added to the resin to provide a blend that included 60 weight percent of the standard bis-phenol A resin and 40 weight percent NANOPOX F400. NANOPOX F400 does not contain core/shell particles. Instead, it contains 40% solid silica particles dispersed in DGEBA. The average particles size is approximately 20 nm. The surface of the resulting molded composite material had an average waviness of 31.7 wavescan units immediately after molding. After hydro-thermal aging for 30 days using the 12-hour automotive aging cycle, the average waviness of the surface increased to 40.5 BYK Gardner wavescan units. After hydro-thermal aging for 90 days using the 12-hour automotive aging cycle, the average waviness of the surface increased to 48.5 BYK Gardner wavescan units. Accordingly, the surface of the molded composite material was neither extremely flat nor durable in accordance with the present invention.

Having thus described exemplary embodiments of the present invention, it should be noted by those skilled in the art that the within disclosures are exemplary only and that various other alternatives, adaptations and modifications may be made within the scope of the present invention. Accordingly, the present invention is not limited by the above-described embodiments, but is only limited by the following claims.

## Claims

1. A composite material comprising:
a fiber layer comprised of fibers that form a surface having a fiber pattern thereon;
a matrix resin comprising a thermosetting resin in which rubber particles are dispersed, said matrix resin forming a resin surface on said fiber pattern; and
a surface finish film located on said resin surface in an amount equal to between 100 and 800 grams per square meter of said resin surface, said surface finish film being an epoxy resin and
wherein the surface of the composite material corresponding to said surface finish film is:
- extremely flat that corresponds to a surface having an average waviness of less than 25 BYK Gardner wavescan units and
- durable that means that said average waviness remains below 25 BYK Gardner wavescan units when subjected to 30 days of a hydro-thermal aging process and below 40 BYK Gardner wavescan units when subjected to 90 days of a hydro-thermal aging process, said hydro-thermal aging process being a continuous series of 12-hours hydro-thermal aging cycles comprising the following successive steps:
- starting out the cycle at 20 °C and 50% relative humidity,
- during the first hour of the cycle, raising the temperature to 80 °C and the relative humidity to 80%,
- during the following 4 hours, keeping the temperature at 80 °C and the relative humidity at 80%
- during the following 2 hours, reducing the temperature to -40 °C and the relative humidity to approximately 20%,
- during the following 4 hours, keeping the temperature at -40 °C and the relative humidity at approximately 20%, and
- during the final hour of the cycle, increasing back the temperature to 20 °C and the relative humidity to 50%.

2. A composite material according to claim **1** wherein said fibers are selected from the group consisting of carbon fibers and glass fibers.

3. A composite material according to claim **1** said rubber particles comprise block copolymers selected from the group consisting of styrene-b-butadiene-b-methylmethacrylate and poly(methylmethacrylate-b-butylacrylate-b-methylmethacrylate).

4. A composite material according to claim **1** wherein said rubber particles are core/shell particles that have an acrylic rubber or butadiene-acrylonitrile rubber core and a polyacrylate shell.

5. A composite material according to claim **1** wherein said fibers are carbon fibers and said thermosetting resin is an epoxy resin.

6. A composite material according to claim **1** wherein the amount of rubber particles dispersed in said resin is between 5 and 15 weight percent of said resin.

7. An automobile comprising a body comprising a composite material according to any one of claims **1** to **6.**

8. A method for making a composite material comprising the steps of:
providing a laminate comprising a fiber layer comprised of fibers that form a surface having a fiber pattern thereon and a matrix resin comprising a thermosetting resin in which rubber particles are dispersed, said matrix resin forming a resin surface on said fiber pattern;
applying a surface finish film on said resin surface in an amount that is equal to between 100 and 800 grams per square meter of said resin surface, said surface finish film being an epoxy resin; and
curing said laminate and surface finish film to provide said composite material
wherein the surface of the composite material corresponding to said surface finish film is:
- extremely flat that corresponds to a surface having an average waviness of less than 25 BYK Gardner wavescan units and
- durable that means that said average waviness remains below 25 BYK Gardner wavescan units when subjected to 30 days of a hydro-thermal aging process and below 40 BYK Gardner wavescan units when subjected to 90 days of a hydro-thermal aging process, said hydro-thermal aging process being a continuous series of 12-hours hydro-thermal aging cycles comprising the following successive steps:
- starting out the cycle at 20 °C and 50% relative humidity,
- during the first hour of the cycle, raising the temperature to 80 °C and the relative humidity to 80%,
- during the following 4 hours, keeping the temperature at 80 °C and the relative humidity at 80%
- during the following 2 hours, reducing the temperature to -40 °C and the relative humidity to approximately 20%,
- during the following 4 hours, keeping the temperature at -40 °C and the relative humidity at approximately 20%, and
- during the final hour of the cycle, increasing back the temperature to 20 °C and the relative humidity to 50%.

9. A method for making a composite material according to claim **8** wherein the composite material corresponds to any one of claims **1** to **6.**

10. A method for making an automobile comprising the step of making a body for said automobile that comprises a composite material according to any one of claims **1** to **6.**

## Patentansprüche

1. Verbundwerkstoff umfassend:
eine Faserschicht, die aus Fasern besteht, die eine Oberfläche bilden, die ein Fasermuster darauf aufweist,
ein Matrixharz umfassend ein Duroplastharz, in dem Kautschukteilchen dispergiert sind, wobei das Matrixharz eine Harzoberfläche auf dem Fasermuster bildet, und
einen Oberflächendeckfilm, der sich auf der Harzoberfläche in einer Menge gleich 100 bis 800 Gramm pro Quadratmeter der Harzoberfläche befindet, wobei der Oberflächendeckfilm aus einem Epoxidharz besteht und
wobei die Oberfläche des Verbundwerkstoffs, die dem Oberflächendeckfilm entspricht, wie folgt ist:
- extrem flach entsprechend einer Oberfläche, die eine durchschnittliche Welligkeit von weniger als 25 BYK Gardner-Wavescan-Einheiten aufweist und
- dauerhaft, was bedeutet, dass die durchschnittliche Welligkeit bei Unterwerfen einem 30 Tage langen hydrothermalen Alterungsvorgang unter 25 BYK Gardner-Wavescan-Einheiten bleibt und bei Unterwerfen einem 90 Tage langen hydrothermalen Alterungsvorgang unter 40 BYK Gardner-Wavescan-Einheiten bleibt, wobei der hydrothermale Alterungsvorgang eine kontinuierliche Serie von 12 Stunden langen hydrothermalen Alterungszyklen ist, die die folgenden aufeinanderfolgenden Schritte umfassen:
- Beginnen des Zyklus bei 20 °C und einer relativen Feuchte von 50 %,
- während der ersten Stunde des Zyklus Erhöhen der Temperatur auf 80 °C und der relativen Feuchte auf 80 %,
- während der folgenden 4 Stunden Halten der Temperatur bei 80 °C und der relativen Feuchte bei 80 %,
- während der folgenden 2 Stunden Reduzieren der Temperatur auf -40 °C und der relativen Feuchte auf etwa 20 %,
- während der folgenden 4 Stunden Halten der Temperatur bei -40 °C und der relativen Feuchte bei etwa 20 % und
- während der letzten Stunde des Zyklus Erhöhen der Temperatur zurück auf 20 °C und der relativen Feuchte auf 50 %.

2. Verbundwerkstoff nach Anspruch 1, wobei die Fasern aus der Gruppe ausgewählt sind bestehend aus Kohlefasern und Glasfasern.

3. Verbundwerkstoff nach Anspruch 1, wobei die Kautschukteilchen Blockcopolymere umfassen ausgewählt aus der Gruppe bestehend aus Styrol-b-Butadien-b-methylmethacrylat und Poly(methylmethacrylat-b-butylacrylat-b-methacrylat).

4. Verbundwerkstoff nach Anspruch 1, wobei die Kautschukteilchen Kern-/Mantelteilchen sind, die einen Acrylkautschuk- oder Butadien-Acrylnitril-Kautschukkern und einen Polyacrylatmantel aufweisen.

5. Verbundwerkstoff nach Anspruch 1, wobei die Fasern Kohlefasern sind und das Duroplastharz ein Epoxidharz ist.

6. Verbundwerkstoff nach Anspruch 1, wobei die Menge an Kautschukteilchen, die in dem Harz dispergieren sind, 5 bis15 Gewichtsprozent des Harzes beträgt.

7. Fahrzeug umfassend eine Karosserie umfassend einen Verbundwerkstoff nach irgendeinem der Ansprüche 1 bis 6.

8. Verfahren für die Herstellung eines Verbundwerkstoffs, umfassend die Schritte des:
Bereitstellens eines Laminats umfassend eine Faserschicht, die aus Fasern besteht, die eine Oberfläche bilden, die ein Fasermuster darauf aufweist, und ein Matrixharz umfassend ein Duroplastharz, in dem Kautschukteilchen dispergiert sind, wobei das Matrixharz eine Harzoberfläche auf dem Fasermuster bildet,
Aufbringens eines Oberflächendeckfilms auf die Harzoberfläche in einer Menge gleich 100 bis 800 Gramm pro Quadratmeter der Harzoberfläche, wobei der Oberflächendeckfilm aus einem Epoxidharz besteht, und
Aushärtens des Laminats und des Oberflächendeckfilms, um den Verbundwerkstoff bereitzustellen,
wobei die Oberfläche des Verbundwerkstoffs, die dem Oberflächendeckfilm entspricht, wie folgt ist:
- extrem flach entsprechend einer Oberfläche, die eine durchschnittliche Welligkeit von weniger als 25 BYK Gardner-Wavescan-Einheiten aufweist und
- dauerhaft, was bedeutet, dass die durchschnittliche Welligkeit bei Unterwerfen einem 30 Tage langen hydrothermalen Alterungsvorgang unter 25 BYK Gardner-Wavescan-Einheiten bleibt und bei Unterwerfen einem 90 Tage langen hydrothermalen Alterungsvorgang unter 40 BYK Gardner-Wavescan-Einheiten bleibt, wobei der hydrothermale Alterungsvorgang eine kontinuierliche Serie von 12 Stunden langen hydrothermalen Alterungszyklen ist, die folgenden aufeinanderfolgenden Schritte umfassend:
- Beginnen des Zyklus bei 20 °C und einer relativen Feuchte von 50 %,
- während der ersten Stunde des Zyklus Erhöhen der Temperatur auf 80 °C und der relativen Feuchte auf 80 %,
- während der folgenden 4 Stunden Halten der Temperatur bei 80 °C und der relativen Feuchte bei 80 %,
- während der folgenden 2 Stunden Reduzieren der Temperatur auf -40 °C und der relativen Feuchte auf etwa 20 %,
- während der folgenden 4 Stunden Halten der Temperatur bei -40 °C und der relativen Feuchte bei etwa 20 % und
- während der letzten Stunde des Zyklus Erhöhen der Temperatur zurück auf 20 °C und der relativen Feuchte auf 50 %.

9. Verfahren für die Herstellung eines Verbundwerkstoffs nach Anspruch 8, wobei der Verbundwerkstoff irgendeinem der Ansprüche 1 bis 6 entspricht.

10. Verfahren für die Herstellung eines Fahrzeugs, umfassend den Schritt des Herstellens einer Karosserie für das Fahrzeug, die einen Verbundwerkstoff nach irgendeinem der Ansprüche 1 bis 6 umfasst.

## Revendications

1. Matériau composite comprenant :
une couche de fibres composée de fibres qui forment une surface ayant un motif de fibres sur celle-ci ;
une matrice de résine comprenant une résine thermodurcissable dans laquelle des particules de caoutchouc sont dispersées, ladite matrice de résine formant une surface de résine sur ledit motif de fibres ; et
un film de fini de surface situé sur ladite surface de résine en une quantité égale à entre 100 et 800 grammes par mètre carré de ladite surface de résine, ledit film de fini de surface étant une résine époxy et dans lequel la surface du matériau composite correspondant audit film de fini de surface est :
- extrêmement plate ce qui correspond à une surface ayant une ondulation moyenne inférieure à 25 unités de mesure par l'appareil BYK Gardner et
- durable ce qui signifie que ladite ondulation moyenne reste inférieure à 25 unités de mesure par l'appareil BYK Gardner lorsqu'elle est soumise à un procédé de vieillissement hydrothermal pendant 30 jours et inférieure à 40 unités de mesure par l'appareil BYK Gardner lorsqu'elle est soumise à un procédé de vieillissement hydrothermal pendant 90 jours, ledit procédé de vieillissement hydrothermal étant une série continue de cycles de vieillissement hydrothermal de 12 heures comprenant les étapes successives suivantes :
- démarrage du cycle à 20 °C et à une humidité relative de 50 %,
- durant la première heure du cycle, élévation de la température à 80 °C et de l'humidité relative à 80 %,
- durant les 4 heures suivantes, maintien de la température à 80 °C et de l'humidité relative à 80 %
- durant les 2 heures suivantes, réduction de la température à -40 °C et de l'humidité relative à approximativement 20 %,
- durant les 4 heures suivantes, maintien de la température à -40 °C et de l'humidité relative à approximativement 20 %, et
- durant l'heure finale du cycle, de nouveau augmentation de la température à 20 °C et de l'humidité relative à 50 %.

2. Matériau composite selon la revendication 1 dans lequel lesdites fibres sont choisies dans le groupe constitué des fibres de carbone et des fibres de verre.

3. Matériau composite selon la revendication 1 lesdites particules de caoutchouc comprennent des copolymères séquencés choisis dans le groupe constitué du styrène-b-butadiène-b-méthylméthacrylate et du poly(méthylméthacrylate-b-butylacrylate-b-méthylméthacrylate).

4. Matériau composite selon la revendication 1 dans lequel lesdites particules de caoutchouc sont des particules de type coeur/enveloppe qui ont un coeur en caoutchouc acrylique ou en caoutchouc de butadiène-acrylonitrile et une enveloppe en polyacrylate.

5. Matériau composite selon la revendication 1 dans lequel lesdites fibres sont des fibres de carbone et ladite résine thermodurcissable est une résine époxy.

6. Matériau composite selon la revendication 1 dans lequel la quantité de particules de caoutchouc dispersées dans ladite résine est entre 5 et 15 pour cent en poids de ladite résine.

7. Automobile comprenant une carrosserie comprenant un matériau composite selon l'une quelconque des revendications 1 à 6.

8. Procédé de fabrication d'un matériau composite comprenant les étapes de :
fourniture d'un stratifié comprenant une couche de fibres composée de fibres qui forment une surface ayant un motif de fibres sur celle-ci et une matrice de résine comprenant une résine thermodurcissable dans laquelle des particules de caoutchouc sont dispersées, ladite résine de matrice formant une surface de résine sur ledit motif de fibres ;
application d'un film de fini de surface sur ladite surface de résine en une quantité qui est égale à entre 100 et 800 grammes par mètre carré de ladite surface de résine, ledit film de fini de surface étant une résine époxy ; et
durcissement desdits stratifié et film de fini de surface pour fournir ledit matériau composite
dans lequel la surface du matériau composite correspondant audit film de fini de surface est :
- extrêmement plate ce qui correspond à une surface ayant une ondulation moyenne inférieure à 25 unités de mesure par l'appareil BYK Gardner et
- durable ce qui signifie que ladite ondulation moyenne reste inférieure à 25 unités de mesure par l'appareil BYK Gardner lorsqu'elle est soumise à un procédé de vieillissement hydrothermal pendant 30 jours et inférieure à 40 unités de mesure par l'appareil BYK Gardner lorsqu'elle est soumise à un procédé de vieillissement hydrothermal pendant 90 jours, ledit procédé de vieillissement hydrothermal étant une série continue de cycles de vieillissement hydrothermal de 12 heures comprenant les étapes successives suivantes :
- démarrage du cycle à 20 °C et à une humidité relative de 50 %,
- durant la première heure du cycle, élévation de la température à 80 °C et de l'humidité relative à 80 %,
- durant les 4 heures suivantes, maintien de la température à 80 °C et de l'humidité relative à 80 %
- durant les 2 heures suivantes, réduction de la température à -40 °C et de l'humidité relative à approximativement 20 %,
- durant les 4 heures suivantes, maintien de la température à -40 °C et de l'humidité relative à approximativement 20 %, et
- durant l'heure finale du cycle, de nouveau augmentation de la température à 20 °C et de l'humidité relative à 50 %.

9. Procédé de fabrication d'un matériau composite selon la revendication 8 dans lequel le matériau composite correspond à l'une quelconque des revendications 1 à 6.

10. Procédé de fabrication d'une automobile comprenant l'étape de fabrication d'une carrosserie pour ladite automobile qui comprend un matériau composite selon l'une quelconque des revendications 1 à 6.
